**Europäisches Patentamt**

**European Patent Office**

**Office européen des brevets**

(11) Veröffentlichungsnummer: **0 256 235**
A2

(12) **EUROPÄISCHE PATENTANMELDUNG**

(21) Anmeldenummer: **87108149.3**

(22) Anmeldetag: **05.06.87**

(51) Int. Cl.4: **E01H 5/08** , E01H 5/07 , B60S 1/54

(30) Priorität: **12.07.86 DE 3623594**

(43) Veröffentlichungstag der Anmeldung:
**24.02.88 Patentblatt 88/08**

(84) Benannte Vertragsstaaten:
**AT CH FR IT LI**

(71) Anmelder: **Ing. Alfred Schmidt GmbH**

**D-7822 St. Blasien(DE)**

(72) Erfinder: **Schmidt, Alfred, Ing.(grad.)**
**Dorf 35**
**D-7821 Bernau(DE)**

(74) Vertreter: **Grättinger, Günter**
**Wittelsbacherstrasse 5 Postfach 16 49**
**D-8130 Starnberg(DE)**

(54) **Schneeräumfahrzeug.**

(57) Ein Schneeräumfahrzeug (l) mit einem frontseitig angebauten Schneeräumgerät, insbesondere Schneefräse oder Schneeschleuder, besitzt für den Antrieb des Schneeräumgeräts einen gekapselten Aufbaumotor (6), der auf der Ladepritsche des Fahrzeugs angeordnet ist. Die erwärmte Kühlluft des Aufbaumotors wird über eine Luftleitvorrichtung von außen gegen die Windschutzscheibe (l5) des Schneeräumfahrzeugs (l) geblasen.

EP 0 256 235 A2

Fig.1

Die Erfindung betrifft ein Schneeräumfahrzeug mit einem frontseitig angebauten Schneeräumgerät, insbesondere Schneefräse oder Schneeschleuder, wobei für den Antrieb des Schneeräumgeräts ein gekapselter Aufbaumotor auf der Ladepritsche des Fahrzeugs vorgesehen ist, dessen Kühler mittels eines Kühlgebläses, welches Kühlluft aus der Umgebung ansaugt, gekühlt wird.

Derartige Schneeräumfahrzeuge sind seit langer Zeit bekannt. Bei hoher Antriebsleistung der frontseitig angebauten Schneeräumgeräte sind Aufbaumotoren erforderlich, welche für eine Leistungsabgabe bis zu 500 KW ausgelegt sein können. Zur Dämpfung des Motorenlärms werden diese üblicherweise gekapselt, d. h. im Inneren eines - schallschluckenden Gehäuses untergebracht. Zur Motorkühlung saugt der Ventilator durch Ansauggitter im Gehäuse Außenluft an, welche für den Wärmeaustausch durch den Motorkühler geleitet wird und im erwärmten Zustand aus dem Gehäuse wieder in die Umgebung abgeblasen wird.
Bei Schneeräumfahrzeugen der genannten Art, welche dank der hohen Antriebsleistungen für das Räumgerät hohe Räumgeschwindigkeiten erzielen, tritt das Problem auf, daß vor der Windschutzscheibe der Fahrerkabine Schneestaub aufgewirbelt wird, der die Sicht des Fahrers stark beeinträchtigt und sich außerdem außen an der Windschutzscheibe niederschlägt. Bei bekannten Konstruktionen hat man versucht, diesen Nachteil zu vermeiden durch hohe Anordnung der Fahrerkabine, beheizte Windschutzscheiben oder schräge Anordnung der Windschutzscheiben, derart, daß deren Oberkante über der Unterkante vorgebaut ist. Selbst die Verwirklichung aller dieser Maßnahmen zusammen ist unzureichend im Sinne einer Lösung des erläuterten Problems. Dies gilt besonders für leistungsstarke Schneeschleudern, bei welchen Arbeitsgeschwindigkeiten bis zu 30 km/h vorkommen.

Demzufolge liegt der vorliegenden Erfindung die Aufgabe zugrunde, eine Lösung für das aufgezeigte Problem - freie Sicht des Fahrers durch die Windschutzscheibe - anzubieten, welche ohne beträchtlichen Mehraufwand verwirklicht werden kann.

Diese Aufgabe wird erfindungsgemäß dadurch gelöst, daß die erwärmte Kühlluft des Aufbaumotors über eine Luftleitvorrichtung von außen gegen die Windschutzscheibe des Schneeräumfahrzeugs geblasen wird.

Bei diesem Lösungsvorschlag wird die bei Aufbaumotoren ohnehin vorhandene erwärmte Kühlluft, welche bisher in die Umgebung abgeleitet wurde, zu einem doppelten Zweck genutzt, nämlich einerseits zum Freiblasen der Windschutzscheibe, so daß sich an dieser kein Schnee mehr festsetzt, und andererseits zum Anwärmen der Windschutzscheibe, was deren Enteisen im Wintereinsatz erheblich erleichtert und beschleunigt.

Im Rahmen der Erfindung genügt es, wenn die Warmluft einen oder mehrere mit der Kapsel des Aufbaumotors verbundene, über oder um die Fahrerkabine geführte Strömungskanäle aufweist, die mit Ausströmdüsen enden, welche schräg gegen die Windschutzscheiben gerichtet sind; dabei können der oder die Strömungskanäle über zusätzliche Leitungsteile im Inneren der Kapsel mit dem ohnehin vorhandenen Kühlgebläse des Aufbaumotors verbunden sein oder an einen Ventilator angeschlossen sein, der das Kühlgebläse des Aufbaumotors ersetzt.

Im Rahmen der Erfindung kann ferner vorgesehen sein, daß die Strömungskanäle an einen zusätzlichen Ventilator angeschlossen sind, welcher zum Absaugen der erwärmten Kühlluft aus dem Inneren der Kapsel dient.

Eine besonders bevorzugte Ausführungsform besteht darin, daß zumindest ein Strömungskanal vorgesehen ist, welcher über das Dach der Fahrerkabine geführt ist, dessen Ausströmdüse von oben gegen die Windschutzscheibe gerichtet ist und eine Ausströmöffnung aufweist, deren Breite etwa jener der Windschutzscheibe entspricht. Diese Version schafft gewissermaßen einen Luftvorhang vor der Windschutzscheibe, wobei die Warmluft von oben nach unten an der Windschutzscheibe entlang strömt.

Um eine möglichst hohe Temperatur der Ausblasluft zu gewährleisten, ist es zweckmäßig, den oder die Strömungskanäle, zumindest soweit sie an der Außenseite der Fahrerkabine geführt sind, und/oder die Kapsel mit einer Wärmeisolierung zu versehen. Die Strömungskanäle selbst können aus Metall oder Kunststoff bestehen.

Im Rahmen der Erfindung sind zahlreiche Varianten für die Ausbildung und räumliche Anordnung der Strömungskanäle denkbar, wobei diese ggf. auch ganz oder teilweise im Inneren der Fahrerkabine verlegt sein können. Besonders zweckmäßig ist, daß entlang des oberen Randes der Windschutzscheibe eine Ausströmdüse, welche von den Strömungskanälen versorgt wird, vorhanden ist.

Im folgenden wird ein Ausführungsbeispiel der Erfindung anhand der Zeichnung beschrieben; es zeigt

Fig. 1 eine Seitenansicht des Schneeräumfahrzeugs, und

Fig. 2 eine Draufsicht auf das Schneeräumfahrzeug.

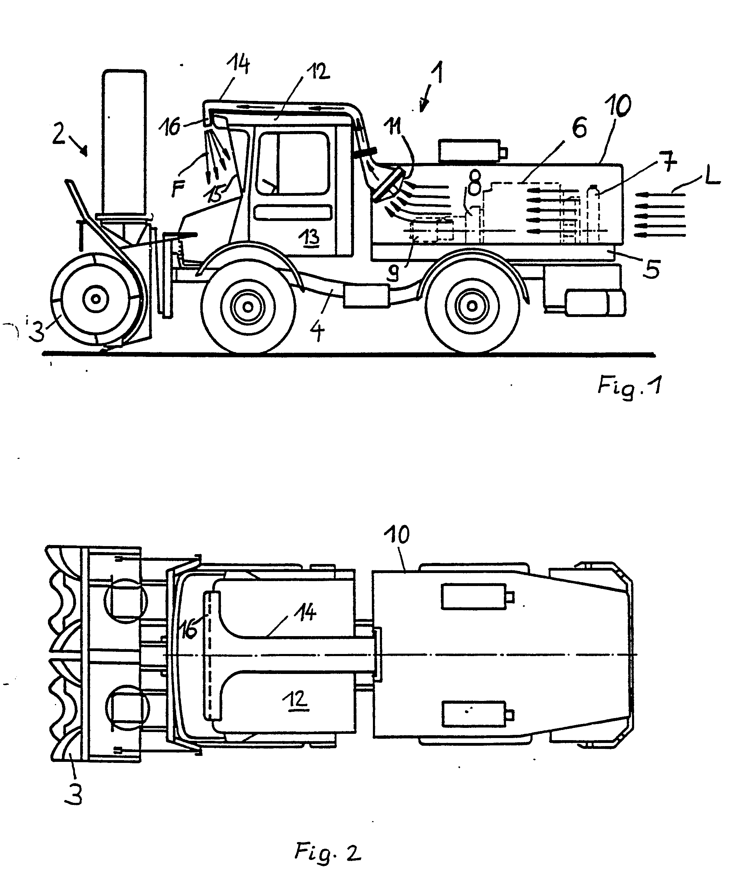

Gemäß Fig. I ist frontseitig an einem Schneeräumfahrzeug (I) eine Schneefräse (2) angebaut. Die Frästrommel (3) der Schneefräse (2) wird über die Antriebsverbindung (4) angetrieben von einem auf einer Ladepritsche (5) des Schneeräumfahrzeugs (I) aufgebauten Aufbaumotor (6). Der Aufbaumotor (6) ist samt Motorkühler (7), Getriebe (8) und Hydraulikpumpe (9) im Inneren einer allseits geschlossenen Kapsel (I0) angeordnet. Die Kapsel (I0), welche primär dem Berührungsschutz und als Schallisolierung dient, besitzt an ihrer Rückseite ein (nicht dargestelltes) Ansauggitter, durch welches Kühlluft gemäß den Pfeilen (L) aus der Umgebung angesaugt wird. Die Kühlluft durchströmt den Motorkühler (7), wo sie im Wärmeaustausch mit dem im Motorkühler (7) zirkulierenden Kühlwasser erstmals erwärmt wird; durch den im Strömungsweg nachfolgenden Motorblock wird sie weiter aufgeheizt und gelangt schließlich durch einen Ventilator (II) in einen über das Dach (I2) der Fahrerkabine 8I3) geleiteten Strömungskanal (I4). Der Strömungskanal (I4) besitzt eine um die Vorderkante des Dachs (I2) herumgeführte, die Windschutzscheibe (I5) gemäß den Pfeilen (F) von oben nach unten anblasende Auströmdüse (I6). Gemäß Fig. 2 ist die Auströmdüse (I6) im wesentlichen über die gesamte Breite der Windschutzscheibe erstreckt, was auf einfache Weise durch entsprechende Verbreiterung des Strömungskanals (I4) verwirklicht ist. Der Strömungskanal (I4) biegt auf der Rückseite der Fahrerkabine (I3) nach unten, wo er in das Innere der Kapsel (I0) eintritt. Am kapselinneren Ende des Strömungskanals (I4) ist der Ventilator (II) angeschlossen. Infolge seiner Anordnung an dem der Frischluftansaugung gegenüberliegenden Ende der Kapsel (I0) durchströmt die Frischluft die gesamte Kapsel in Längsrichtung, wobei sie durch den Motorkühler (7) und entlang aller anderen in der Kapsel angeordneten, wärmeabgebenden Aggregate strömt, bevor sie in den Strömungskanal (I4) eintritt und gegen die Windschutzscheibe (I5) geblasen wird. Dieser Blasstrom gemäß den Pfeilen (F) heizt einerseits die Windschutzscheibe auf; insbesondere dient er aber der Beseitigung des durch die Schneefräse (2) vor dem Räumfahrzeug (I) aufgewirbelten Schnees, so daß die Sicht des Fahrers frei bleibt und der Schnee sich auch nicht an der Windschutzscheibe festsetzen kann.

**Ansprüche**

I. Schneeräumfahrzeug (I) mit einem frontseitig angebauten Schneeräumgerät, insbesondere Schneefräse oder Schneeschleuder, wobei für den Antrieb des Schneeräumgeräts ein gekapselter Aufbaumotor (6) auf der Ladepritsche (5) des Fahrzeugs vorgesehen ist, dessen Kühler (7) mittels eines Kühlgebläses, welches Kühlluft aus der Umgebung ansaugt, gekühlt wird, dadurch gekennzeichnet, daß die erwärmte Kühlluft des Aufbaumotors (6) über eine Luftleitvorrichtung von außen gegen die Windschutzscheibe (I5) des Schneeräumfahrzeugs (I) geblasen wird.

2. Schneeräumfahrzeug nach Anspruch I, dadurch gekennzeichnet, daß die Luftleitvorrichtung einen oder mehrere mit der Kapsel (I0) des Aufbaumotors (6) verbundene, über oder um die Fahrerkabine (I3) geführte Strömungskanäle (I4) aufweist, die mit Ausströmdüsen (I6) enden, welche schräg gegen die Windschutzscheibe (I5) gerichtet sind.

3. Schneeräumfahrzeug nach Anspruch 2 , dadurch gekennzeichnet, daß der oder die Strömungskanäle (I4) im Inneren der Kapsel (I0) mit einem Ventilator (II) verbunden sind, welcher die erwärmte Kühlluft des Aufbaumotors (6) in der Kapsel (I0) ansaugt und in den oder die Strömungskanäle (I4) fördert.

4. Schneeräumfahrzeug nach Anspruch 3, dadurch gekennzeichnet, daß der Ventilator (II) das Kühlgebläse des Aufbaumotors (6) ersetzt.

5. Schneeräumfahrzeug nach Anspruch 2, dadurch gekennzeichnet, daß zumindest ein Strömungskanal (I4) vorgesehen ist, welcher über das Dach (I2) der Fahrerkabine (I3) geführt ist, dessen Auströmdüse (I6) von oben gegen die Windschutzscheibe (I5) gerichtet ist und eine Ausströmöffnung aufweist, deren Breite etwa jener der Windschutzscheibe (I5) entspricht.

0 256 235

Fig.1

Fig. 2